# EUROPEAN PATENT APPLICATION

(11) **EP 4 318 041 A1**
(43) Date of publication of application: **07.02.2024**
(21) Application number: 22779538.2
(22) Date of filing: 08.02.2022
(51) Int. Cl.: G01S 17/34

(54) **DEVICE AND METHOD FOR MEASURING DISTANCE AND/OR SPEED OF OBJECT**

(30) Priority: 30.03.2021 JP 2021057408
(71) Applicant: Panasonic Intellectual Property Management Co., Ltd., Kadoma-shi, Osaka 571-0057 (JP)
(72) Inventor: NARUMI Kenji, Kadoma-shi Osaka 571-0057 (JP); KATO Yumiko, Kadoma-shi Osaka 571-0057 (JP)
(74) Representative: Grünecker Patent- und Rechtsanwälte PartG mbB
(86) International application number: PCT/JP2022/004778
(87) International publication number: WO 2022/209309

(57) **Abstract**

A measurement apparatus includes a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, a storage device that stores a plurality of pieces of correcting data for use in correction of the detection signal, each of the plurality of pieces of correcting data being associated with a corresponding one of a plurality of different operating states of the light source, and a processing circuit that sends out, to the light source, a control signal that sweeps a frequency of the light that is emitted from the light source, corrects the detection signal on the basis of one or more pieces of correcting data selected from among the plurality of pieces of correcting data according to the operating state of the light source, generates measurement data on a distance to and/or a velocity of the physical object on the basis of the detection signal thus corrected, and outputs the measurement data.

## Description

### Technical Field

The present disclosure relates to an apparatus and a method for measuring the distance to and/or the velocity of a physical object.

### Background Art

A ranging apparatus based on an FMCW (frequency modulated continuous wave) technique sends out frequency-modulated electromagnetic waves and measures distance on the basis of a difference in frequency between transmitted waves and reflected waves. In a case where the electromagnetic waves used are radio waves such as millimeter waves, the FMCW ranging apparatus is called "FMCW radar". The FMCW radar uses, for example, a voltage-controlled oscillator (VCO) as an oscillating source of radio waves. In a case where the electromagnetic waves are light such as visible light or infrared light, the FMCW ranging apparatus is called "FMCW LiDAR". The FMCW LiDAR uses, for example, a laser light source as a light source.

The FMCW LiDAR emits periodically frequency-modulated light from the light source toward a physical object and obtains interfering light by effecting interference between reflected light from the physical object and reference light from the light source. The interfering light is detected by a photodetector and converted into an electric signal. This electrical signal includes a signal component of a frequency equivalent to a difference between the frequency of the reflected light and the frequency of the reference light. This signal component is called "beat signal". The frequency of the beat signal is called "beat frequency". There is a correlation between the beat frequency and the distance to the physical object. Accordingly, the distance to the physical object can be calculated on the basis of the beat frequency. Furthermore, the velocity of the physical object can be calculated too through the utilization of a Doppler shift for the reflected light from the physical object as the physical object moves. Unlike a TOF (time-of-flight) LiDAR, the FMCW LiDAR has such a feature that a result of ranging is insusceptible to disturbance light, as the FMCW LiDAR detects the frequency of an electrical signal outputted from the photodetector. On the other hand, it has been considered that the precision of distance measurement by the FMCW LiDAR depends on how linearly the frequency of light can be modulated with respect to time.

PTL 1 states that even in a case where a voltage-controlled oscillator of an FMCW radar has linearly swept a voltage with respect to time, there is a decrease in ranging performance due to a nonlinear change in frequency. In order to solve this problem, PTL 1 discloses a method for dynamically changing the timing of sampling of an interfering signal on the basis of a sweep signal that is obtained from an artificial target. PTL 1 states that this method makes it possible to compensate for the nonlinearity of a frequency sweep.

PTL 2 discloses an FMCW radar apparatus for correcting the frequency of an interfering signal using correction data corresponding to a plurality of distances and a plurality of ambient temperatures. PTL 2 states that this apparatus makes it possible to improve detection accuracy.

PTL 3 discloses an example of an FMCW LiDAR apparatus that continuously measures the frequencies of beat signals and calculates the distance to a physical object on the basis of the average of the frequencies thus measured. PTL 3 states that this apparatus eliminates the effect of a nonlinear chirp of a laser and makes accurate distance measurement possible.

### Citation List

### Patent Literature

PTL 1: International Publication No. 2006/035199
PTL 2: Japanese Unexamined Patent Application Publication No. 2014-185973
PTL 3: Japanese Unexamined Patent Application Publication No. 2019-45200

### Summary of Invention

### Technical Problem

The present disclosure provides a novel technology that can more precisely measure a distance and/or a velocity regardless of the operating state of a light source in an FMCW LiDAR.

### Solution to Problem

A measurement apparatus according to an aspect of the present disclosure includes a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, a storage device that stores a plurality of pieces of correcting data for use in correction of the detection signal, each of the plurality of pieces of correcting data being associated with a corresponding one of a plurality of different operating states of the light source, and a processing circuit that sends out, to the light source, a control signal that sweeps a frequency of the light that is emitted from the light source, corrects the detection signal on the basis of one or more pieces of correcting data selected from among the plurality of pieces of correcting data according to the operating state of the light source, generates measurement data on a distance to and/or a velocity of the physical object on the basis of the detection signal thus corrected, and outputs the measurement data.

It should be noted that general or specific embodiments of the present disclosure may be implemented as a system, an apparatus, a method, an integrated circuit, a computer program, a computer-readable storage medium such as a storage disk, or any selective combination thereof. The computer-readable storage medium may include a volatile storage medium or may include a nonvolatile storage medium such as a CD-ROM (compact disc read-only memory). The apparatus may be constituted by one or more apparatuses. In a case where the apparatus is constituted by two or more apparatuses, the two or more apparatuses may be placed in one piece of equipment or may be separately placed in two or more separate pieces of equipment. The term "apparatus" herein or in the claims may not only mean one apparatus but also mean a system composed of a plurality of apparatuses.

### Advantageous Effects of Invention

An embodiment of the present disclosure makes it possible to, by correcting, according to the operating state of a light source, a detection signal that is outputted from a photodetector, soften the effects of nonlinear frequency modulation that occurs differently according to the operating state of the light source. This making it possible to more precisely measure the distance to and/or the velocity of a physical object.

### Brief Description of Drawings

[Fig. 1] Fig. 1 is a diagram showing data obtained through an experiment conducted by the inventors.
[Fig. 2] Fig. 2 is a block diagram schematically showing a configuration of a measurement apparatus according to a first embodiment.
[Fig. 3] Fig. 3 is a block diagram showing configuration examples of a light source and an interference optical system.
[Fig. 4] Fig. 4 is a diagram showing examples of a control signal that is outputted from a processing circuit and a driving current signal that is outputted from a driving circuit.
[Fig. 5] Fig. 5 is a block diagram showing a configuration example of a measurement apparatus whose interference optical system is a fiber optical system.
[Fig. 6] Fig. 6 is a block diagram showing an example of a measurement apparatus including an optical deflector.
[Fig. 7A] Fig. 7A is a diagram schematically showing examples of time changes in frequency of reference light and reflected light in a case where a physical object is at rest.
[Fig. 7B] Fig. 7B is a diagram schematically showing examples of time changes in frequency of reference light and reflected light in a case where a physical object is approaching the measurement apparatus 100.
[Fig. 8] Fig. 8 is a flow chart showing an example of an operation of calibration.
[Fig. 9] Fig. 9 is a graph showing an example of a result of analysis of the period of a detection signal.
[Fig. 10] Fig. 10 is a diagram showing an example of a relationship between control signal voltage and period.
[Fig. 11A] Fig. 11A shows an example of a correction table associated with a first operating state of the light source.
[Fig. 11B] Fig. 11B shows an example of a correction table associated with a second operating state of the light source.
[Fig. 12] Fig. 12 is a diagram showing examples of the waveforms of uncorrected and corrected detection signals.
[Fig. 13] Fig. 13 is a diagram showing an example of a conversion table that defines a relationship between the frequency of a beat signal and distance.
[Fig. 14A] Fig. 14A is a diagram showing an example of a conversion table that defines a relationship between the frequency of a beat signal and distance in correspondence with the first operating state.
[Fig. 14B] Fig. 14B is a diagram showing an example of a conversion table that defines a relationship between the frequency of a beat signal and distance in correspondence with the second operating state.
[Fig. 15] Fig. 15 is a flow chart showing an example of a ranging operation.
[Fig. 16] Fig. 16 is a block diagram schematically showing a configuration of a measurement apparatus according to a second embodiment.
[Fig. 17] Fig. 17 is a flow chart showing a calibration operation according to the second embodiment.
[Fig. 18] Fig. 18 is a flow chart showing a ranging operation according to the second embodiment.
[Fig. 19A] Fig. 19A is a diagram showing an example of a correction table that defines a relationship between the voltage of a control signal and sampling interval.
[Fig. 19B] Fig. 19B is a diagram showing an example of a correction table that defines a relationship between phase of frequency modulation and periodic ratio.
[Fig. 19C] Fig. 19C is a diagram showing an example of a correction table that defines a relationship between phase of frequency modulation and sampling interval.
[Fig. 20] Fig. 20 is a graph showing a result of creation of correction tables by performing calibrations with two types of modulation voltage amplitude.
[Fig. 21A] Fig. 21A is a graph showing a result of application of a correction table corresponding to Vₘ = 0.7 V to a detection signal obtained in a case where Vₘ = 0.7 V.
[Fig. 21B] Fig. 21B is a graph showing a result of application of a correction table corresponding to Vₘ = 0.7 V to a detection signal obtained in a case where Vₘ = 1.0 V.
[Fig. 21C] Fig. 21C is a graph showing a result of application of a correction table corresponding to Vₘ = 1.0 V to a detection signal obtained in a case where Vₘ = 1.0 V.
[Fig. 22] Fig. 22 is a graph showing a result of creation of correction tables in a case where calibrations were performed with two types of bias voltage.
[Fig. 23] Fig. 23 is a graph showing a result of creation of correction tables in a case where calibrations were performed with two types of temperature.
[Fig. 24] Fig. 24 is a diagram showing an example in which a new correction table was created from two already-existing two correction tables.
[Fig. 25] Fig. 25 is a diagram showing an example in which a new correction table was created from two already-existing two correction tables.
[Fig. 26] Fig. 26 is a block diagram showing a configuration of a measurement apparatus according to an experimental example for verifying the effects of the embodiments of the present disclosure.

### Description of Embodiments

### (Underlying Knowledge Forming Basis of the Present Disclosure)

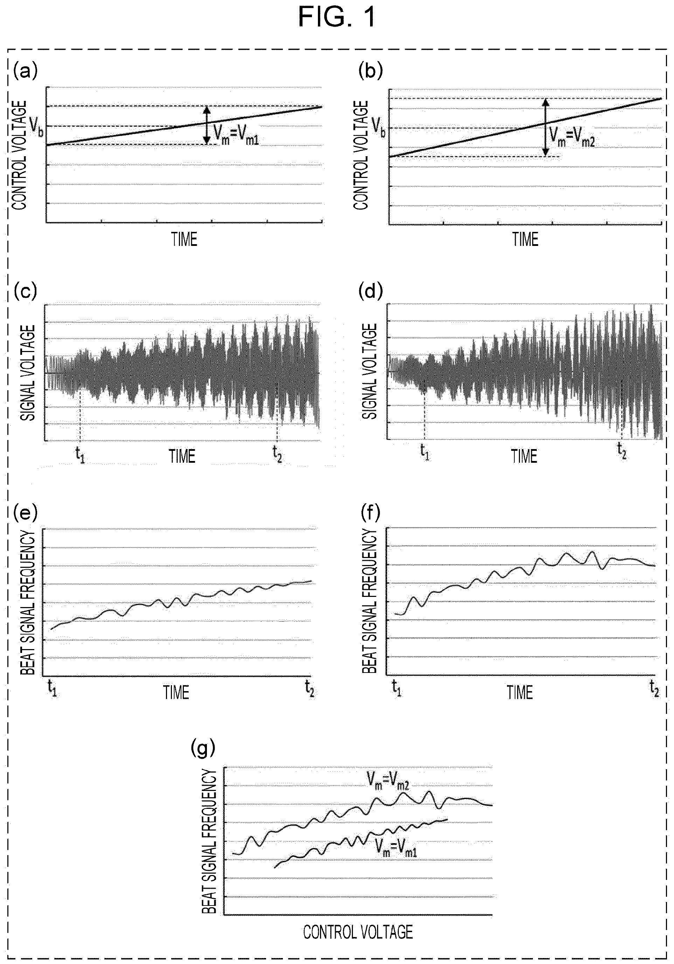

The inventors found the following phenomenon in the waveform of a detection signal that is obtained by an FMCW LiDAR detecting interfering light. Even if the control voltage of a light source is linearly swept for the purpose of linear modulation of the frequency of light, the frequency linearly changes; however, the nonlinearity may change according to the operating state of the light source. The following explains this phenomenon with reference to Fig. 1.

Fig. 1 is a diagram showing data obtained through an experiment conducted by the inventors. In the experiment, a semiconductor laser light source was used as a light source. By changing the voltage (hereinafter also referred to as "control voltage") that is inputted to the light source, the frequency of laser light that is emitted from the light source is changed. The control signal is linearly swept in a predetermined voltage range Vₘ (hereinafter also referred to as "modulation voltage amplitude") and with predetermined periodicity. As a result, periodically frequency-modulated laser light is emitted from the light source.

Graph (a) in Fig. 1 shows an example of a time change in voltage of a control signal that is inputted to the light source. In this example, the control signal is linearly swept with respect to time in a voltage range Vₘ₁. The median (hereinafter also referred to as "bias voltage") in the voltage range is V_{b}. Graph (b) of Fig. 1 shows an example of a time change in control voltage in a case where the same laser light source is controlled under the same temperature conditions and with a different control signal. In this example, the bias voltage is V_{b} as in the example of (a), and the modulation voltage amplitude is Vₘ₂. Vm₂ is 1.5 times greater than Vₘ₁.

Graphs (c) and (d) in Fig. 1 each show an example of the waveform of an electric signal (hereinafter also referred to as "detection signal") obtained by detecting interfering light resulting from interference between reflected light produced in a case where laser light was emitted from the light source toward a reference reflecting plate at rest and reference light traveling from the light source toward the photodetector via an optical system. Graph (c) shows the waveform of a detection signal in a case where the modulation voltage amplitude is Vₘ₁, and graph (d) shows the waveform of a detection signal in a case where the modulation voltage amplitude is Vₘ₂. The time axes in these graphs are identical to the time axes in graphs (a) and (b).

Graph (e) in Fig. 1 shows a time change in instantaneous frequency of a beat signal as obtained by conducting a frequency analysis of the signal waveform of graph (c), and graph (f) in Fig. 1 shows a time change in instantaneous frequency of a beat signal as obtained by conducting a frequency analysis of the signal waveform of graph (d). The waveform of graph (e) was obtained on the basis of signal voltage in a range from a time ti to a time t₂ in graph (c), and the waveform of graph (f) was obtained on the basis of signal voltage in a range from a time ti to a time t₂ in graph (d).

Graph (g) in Fig. 1 is a graph obtained by plotting, as a function of control signal voltage, the instantaneous frequencies corresponding to the aforementioned two modulation voltage amplitudes Vₘ₁ and Vₘ₂.

In the present experiment, the physical object at rest was irradiated with light; therefore, if the frequency of the light too was linearly swept in correspondence with the linear sweep of the control voltage, the frequency of a beat signal should be constant regardless of time. However, as shown in graphs (e) and (f) of Fig. 1, the frequency of a beat signal temporally fluctuates. Further, there is a difference between the nonlinearity of the frequency of the beat signal with respect to time in the case where the modulation voltage amplitude is Vₘ₁ and the nonlinearity of the frequency of the beat signal with respect to time in the case where the modulation voltage amplitude is Vₘ₂. This indicates that the nonlinearity of the frequency of light with respect to time varies according to the magnitude of modulation voltage amplitude.

Furthermore, as can be seen from graph (g) of Fig. 1, even in a case where the frequencies of the beat signals are plotted as a function of control signal voltage, there is a difference between the nonlinearity of fluctuations in frequency of the beat signal in the case where the modulation current amplitude is Vₘ₁ and the nonlinearity of fluctuations in frequency of the beat signal in the case where the modulation voltage amplitude is Vₘ₂. For example, in the example in which the modulation current amplitude is Vₘ₁, the frequency of the beat signal tends to relatively increase as the control voltage increases toward a high-voltage side; on the other hand, in the example in which the modulation current amplitude is Vₘ₂, the control voltage tends to become saturated on the same high-voltage side. This indicates that even if a particular control voltage is applied to the laser light source at a certain moment, the frequency of light that is emitted from the laser light source does not necessarily become constant but fluctuates depending on the modulation voltage amplitude of a control signal. It is considered that such a phenomenon occurs for the following reason. Depending on the magnitude of modulation voltage amplitude, there is a difference in the way of temporal change of heat that a current that drives the laser element gives to the laser element. It is considered that this difference in the way of changing affects temporal changes in resonant length, gain curve, and oscillation mode of the laser element and brings a difference to fluctuations in oscillating frequency of the laser.

Such fluctuations in beat frequency with respect to control voltage or time make it impossible to uniquely determine the distance to the physical object. It is conceivable that for the purpose of stabilizing fluctuations in beat frequency, spectra obtained by frequency analyses may be integrated (i.e., averaged) with respect to control voltage or time. However, in a case where such integration is performed, the thickening of the spectrum line width of a beat signal makes it hard to determine the peak frequency of the beat signal, decreasing the precision of distance measurement. Unlike in the case of an FMCW radar that uses radio waves, a signal representing the frequency of light cannot be directly detected. This makes it impossible to even exercise direct feedback control of the control voltage in such a manner as to linearly change the oscillating frequency of a laser.

As noted above, a change in operating state of a light source in an FMCW LiDAR was found to produce the above problem. In order to solve the aforementioned problems, the inventors conceived of configurations of embodiments of the present disclosure as described below. The following describes an exemplary embodiment of the present disclosure.

A measurement apparatus according to an aspect of the present disclosure includes a light source, an interference optical system, a photodetector, a storage device, and a processing circuit. The light source emits frequency-modulated light. The interference optical system separates the light emitted from the light source into reference light and output light and generates interfering light resulting from interference between reflected light produced by the output light being reflected off a physical object and the reference light. The photodetector receives the interfering light and outputs a detection signal corresponding to an intensity of the interfering light. The storage device stores a plurality of pieces of correcting data for use in correction of the detection signal. Each of the plurality of pieces of correcting data is associated with a corresponding one of a plurality of different operating states of the light source. The processing circuit sends out, to the light source, a control signal that sweeps a frequency of the light that is emitted from the light source. The processing circuit corrects the detection signal on the basis of one or more pieces of correcting data selected from among the plurality of pieces of correcting data according to the operating state of the light source, generates measurement data on a distance to and/or a velocity of the physical object on the basis of the detection signal thus corrected, and outputs the measurement data.

According to the foregoing configuration, the processing circuit can appropriately correct the detection signal on the basis of one or more pieces of correcting data selected from among the plurality of pieces of correcting data according to the operating state of the light source. This makes it possible to soften the effects of nonlinear frequency modulation that occurs differently according to the operating state, making it possible to more precisely measure the distance to and/or the velocity of the physical object.

The measurement apparatus may further include a temperature sensor that measures a temperature of the light source. The plurality of pieces of correcting data may include two or more pieces of first correcting data each of which is associated with a corresponding one of two or more operating states differing in temperature of the light source. The processing circuit may correct the detection signal on the basis of one or more pieces of first correcting data selected from among the two or more pieces of first correcting data according to the temperature of the light source as measured by the temperature sensor. According to this configuration, the processing circuit can appropriately correct the detection signal on the basis of one or more pieces of first correcting data selected according to the temperature of the light source. This makes it possible to soften the effects of nonlinear frequency modulation that occurs differently according to the temperature of the light source, making it possible to more precisely measure the distance to and/or the velocity of the physical object.

The control signal may be a signal that inputs a periodically fluctuating voltage or current to the light source. The plurality of pieces of correcting data may include two or more pieces of second correcting data each of which is associated with a corresponding one of two or more operating states differing in amplitude of the voltage or current of the control signal. The processing circuit may correct the detection signal on the basis of one or more pieces of second correcting data selected from among the two or more pieces of second correcting data according to the amplitude of the present voltage or current. According to this configuration, the processing circuit can appropriately correct the detection signal on the basis of one or more pieces of second correcting data selected according to the amplitude of the present voltage or the present current of the control signal. This makes it possible to soften the effects of nonlinear frequency modulation that occurs differently according to the amplitude of the voltage or the current of the control signal, making it possible to more precisely measure the distance to and/or the velocity of the physical object.

The control signal may be a signal that inputs, to the light source, a voltage that periodically fluctuates around a bias voltage or a current that periodically fluctuates around a bias current. The plurality of pieces of correcting data may include two or more pieces of third correcting data each of which is associated with a corresponding one of two or more operating states differing in the bias voltage or the bias current of the control signal. The processing circuit corrects the detection signal on the basis of one or more pieces of third correcting data selected from among the two or more pieces of third correcting data according to the present bias voltage or the present bias current. According to this configuration, the processing circuit can appropriately correct the detection signal on the basis of one or more pieces of third correcting data selected according to the present bias voltage or the present bias current of the control signal. This makes it possible to soften the effects of nonlinear frequency modulation that occurs differently according to the bias voltage or the bias current of the control signal, making it possible to more precisely measure the distance to and/or the velocity of the physical object.

In a case where no correcting data corresponding to the present operating state of the light source is stored in the storage device, the processing circuit may generate, on the basis of at least one of the plurality of pieces of correcting data stored in the storage device, correcting data corresponding to the current operating state and correct the detection signal on the basis of the correcting data thus generated. For example, one or more pieces of correction data that are close to the present operating state may be selected from among the plurality of pieces of correcting data, and the detection signal may be corrected on the basis of the correcting data thus selected. Such an operation makes it possible to correct the detection signal even in a case where no correcting data corresponding to the present operating state is stored in the storage device, making it possible to more precisely measure the distance to and/or the velocity of the physical object.

In a case where no correcting data corresponding to the present operating state of the light source is stored in the storage device, the processing circuit may select, from among the plurality of pieces of correcting data stored in the storage device, two pieces of correcting data associated with two operating states that are closest to the present operating state, generate, through an interpolation process involving use of the two pieces of correcting data thus selected, correcting data corresponding to the current operating state, and correct the detection signal on the basis of the correcting data thus generated. The "two operating states that are closest to the present operating states" mean an operating state that is closest to the present operating state and an operating state that is second closest to the present operating state. Through an interpolation process involving the use of two pieces of correcting data respectively corresponding to those two operating states, suitable correcting data corresponding to the present operating state can be generated. Correcting the detection signal on the basis of the correcting data thus generated makes it possible to more precisely measure the distance to and/or the velocity of the physical object even in a case where no correcting data corresponding to the present operating state is stored in the storage device.

Each of the plurality of pieces of correcting data may contain information on correction values corresponding separately to each of a plurality of voltage values or a plurality of current values of the control signal. The correction values may for example be coefficients for correcting the period of the detection signal. The processing circuit can correct the detection signal by determining the period from the detection signal and multiplying the period by a correction value.

Each of the plurality of pieces of correcting data may contain information on correction values corresponding separately to each of a plurality of phases or a plurality of timings of frequency modulation by the control signal. On the basis of such correcting data containing information on correction values, the processing circuit can appropriately correct the detection signal.

Each of the plurality of pieces of correcting data may contain information on a correction value for changing a sampling timing at which the processing circuit samples the detection signal. By determining the timing of sampling of the detection signal in accordance with the correction value, the processing circuit can correct the detection signal.

Each of the pieces of correcting data may be data representing a correction table or a correction function for determining a correction value for use in correction of the detection signal. The processing circuit can appropriately correct the detection signal on the basis of a correction value indicated by correcting data corresponding to the present operating state.

The processing circuit may create the plurality of pieces of correcting data and store each of the plurality of pieces of correcting data in the storage device in association with a corresponding operating state of the light source. Such an operation makes it possible to achieve the aforementioned operation of, at the time of measurement, selecting correcting data corresponding to the operating state and correcting the detection signal.

A method according to another embodiment of the present disclosure is executed by a computer in a system including a measurement apparatus. The measurement apparatus includes a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, and a storage device that stores a plurality of pieces of correcting data for use in correction of the detection signal, each of the plurality of pieces of correcting data being associated with a corresponding one of a plurality of different operating states of the light source. The method includes sending out, to the light source, a control signal that sweeps a frequency of the light that is emitted from the light source, correcting the detection signal on the basis of one or more pieces of correcting data selected from among the plurality of pieces of correcting data according to the operating state of the light source, generating measurement data on a distance to and/or a velocity of the physical object on the basis of the detection signal thus corrected, and outputting the measurement data.

A computer program according to still another embodiment of the present disclosure is executed by a computer in a system including a measurement apparatus. The measurement apparatus includes a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, and a storage device that stores a plurality of pieces of correcting data for use in correction of the detection signal, each of the plurality of pieces of correcting data being associated with a corresponding one of a plurality of different operating states of the light source. The computer program causes the computer to execute operations including sending out, to the light source, a control signal that sweeps a frequency of the light that is emitted from the light source, correcting the detection signal on the basis of one or more pieces of correcting data selected from among the plurality of pieces of correcting data according to the operating state of the light source, generating measurement data on a distance to and/or a velocity of the physical object on the basis of the detection signal thus corrected, and outputting the measurement data.

In the present disclosure, all or some of the circuits, units, apparatuses, members, or sections or all or some of the functional blocks in the block diagrams may be implemented as one or more of electronic circuits including, but not limited to, a semiconductor device, a semiconductor integrated circuit (IC), or an LSI (large scale integration). The LSI or IC can be integrated into one chip, or also can be a combination of multiple chips. For example, functional blocks other than a memory may be integrated into one chip. The name used here is LSI or IC, but it may also be called system LSI, VLSI (very large scale integration), or ULSI (ultra large scale integration) depending on the degree of integration. A Field Programmable Gate Array (FPGA) that can be programmed after manufacturing an LSI or a reconfigurable logic device that allows reconfiguration of the connection or setup of circuit cells inside the LSI can be used for the same purpose.

Further, it is also possible that all or some of the functions or operations of the circuits, units, apparatuses, members, or sections are implemented by executing software. In such a case, the software is stored on one or more non-transitory storage media such as a ROM, an optical disk, or a hard disk drive, and when the software is executed by a processor, the software causes the processor together with peripheral devices to execute the functions specified in the software. A system or an apparatus may include such one or more non-transitory storage media on which the software is stored and a processor together with necessary hardware devices such as an interface.

The following describes embodiments of the present disclosure in more detail. It should be noted that the embodiments to be described below illustrate general or specific examples. The numerical values, shapes, constituent elements, placement and topology of constituent elements, steps, orders of steps, or other features that are shown in the following embodiments are merely examples and are not intended to limit the present disclosure. Further, those of the constituent elements in the following embodiments which are not recited in an independent claim representing the most generic concept are described as optional constituent elements. Further, the drawings are schematic views and are not necessarily strict illustrations. Furthermore, in the drawings, substantially identical or similar components are given identical or similar reference signs, and a repeated description may be omitted or simplified.

### (First Embodiment)

A measurement apparatus according to an exemplary first embodiment of the present disclosure is described. The measurement apparatus of the present embodiment is a ranging apparatus that measures the distance to a physical object using an FMCW-LiDAR technique. The measurement apparatus may measure the velocity of the physical object in addition to or instead of the distance. The measurement apparatus may be mounted on a movable body such as a self-guided vehicle, an automated guided vehicle (AGV), an unmanned aerial vehicle (UAV), or a mobile robot. The measurement apparatus may be mounted for use on any piece of equipment as well as a movable body.

### <Configuration>

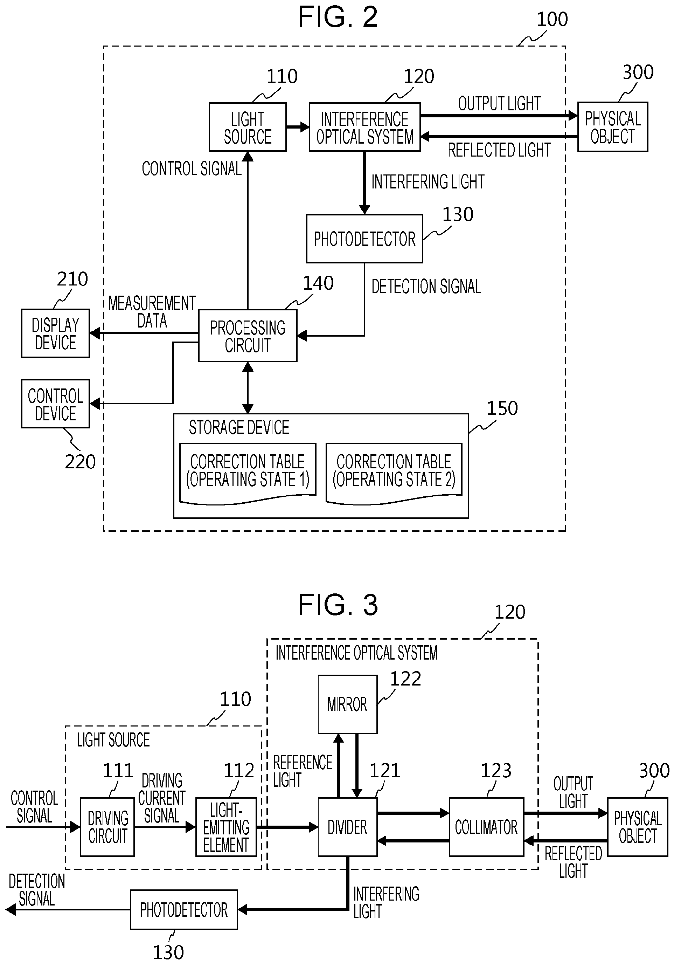

Fig. 2 is a block diagram schematically showing a configuration of a measurement apparatus 100 according to the present embodiment. In Fig. 2, the thick arrows indicate the flow of light, and the thin arrows indicate the flow of signals or data. Fig. 2 also shows a physical object 300 the distance to which and/or the velocity of which is/are to be measured. The physical object 300 is any object such as an obstacle, a person, or a movable body (e.g., an automobile, a two-wheeled vehicle, a mobile robot, or a drone).

As shown in Fig. 2, the measurement apparatus 100 includes a light source 110, an interference optical system 120, a photodetector 130, a processing circuit 140, and a storage device 150. The light source 110 can change, in response to a control signal outputted from the processing circuit 140, the frequency of light that the light source 110 emits. The interference optical system 120 separates the emitted light from the light source 110 into reference light and output light and generates interfering light by effecting interference between reflected light produced by the output light being reflected by the physical object 300 and the reference light. The interfering light falls on the photodetector 130. Detailed configurations of the light source 110 and the interference optical system 120 will be described later.

The photodetector 130 receives the interfering light and generates an electric signal corresponding to the intensity of the interfering light. This electric signal is hereinafter referred to as "detection signal". The photodetector 130 includes one or more photosensitive elements. The photosensitive elements each include a photoelectric conversion element such as a photodiode. The photodetector 130 may be a sensor, such an image sensor, including a plurality of photosensitive elements.

The processing circuit 140 is an electronic circuit that controls the light source 110 and executes processing based on a detection signal outputted from the photodetector 130. The processing circuit 140 may include a control circuit that controls the light source 110 and a signal processing circuit that executes signal processing based on the detection signal. The processing circuit 140 may be constituted as one circuit or may be an aggregate of a plurality of separate circuits. The processing circuit 140 sends out a control signal to the light source 110. The control signal causes the light source 110 to periodically change the frequency of the emitted light within a predetermined range. In other words, the control signal is a signal that sweeps the frequency of light that is emitted from the light source 110. The control signal is a signal that inputs, to the light source 110, a voltage or a current that periodically fluctuates with certain amplitude. The processing circuit 140 acquires a detection signal outputted from the photodetector 130 with the light source 110 emitting frequency-modulated light and corrects the detection signal according to the operating state of the light source 110. The processing circuit 140 corrects the detection signal on the basis of correcting data stored in the storage device 150. The processing circuit 140 determines the distance to the physical object 300 and/or the velocity of the physical object 300 on the basis of the detection signal thus corrected. The processing circuit 140 generates and outputs data representing the distance and/or the velocity. This data is hereinafter referred to as "measurement data".

The storage device 150 includes any storage medium such as a semiconductor memory, a magnetic disk, or an optical disk. The storage device 150 stores correcting data that is used in a correction process that is executed by the processing circuit 140. The correcting data includes a plurality of correction tables. Each of these correction tables is stored in association with a corresponding one of a plurality of different operating states of the light source 110. Fig. 2 illustrates a correction table corresponding to a first operating state of the light source 110 and a correction table corresponding to a second operating state of the light source 110. Details of these correction tables will be described later. Each correction table is an example of the correcting data. The correcting data is not limited to a correction table but may be data of any form such as a function that defines a correspondence relationship between an operating state and a correction value of a detection signal. The storage device 150 also stores a computer program that is executed by the processing circuit 140.

The processing circuit 140 and the storage device 150 may be integrated on one circuit board, or may be provided on separate circuit boards. Functions of the processing circuit 140 may be dispersed across a plurality of circuits. At least some of the functions of the processing circuit 140 may be implemented by an external computer installed in a place away from other constituent elements. Such an external computer may execute, vis a cable or wireless communication network, operating control of the light source 110 and the photodetector 130 and/or signal processing based on a detection signal outputted from the photodetector 130.

In measuring the distance to the physical object 300, the processing circuit 140 executes the following actions:
·Send out a control signal to the light source 110 and causes the light source 110 to emit light whose frequency periodically changes within a predetermined range.
·Select, from among the plurality of correction tables stored in the storage device 150, one or more correction tables corresponding to the present operating state of the light source 110.
·Correct the waveform of a detection signal on the basis of the correction tables thus selected.
·Calculate the frequency of a beat signal through a frequency analysis based on the waveform thus corrected.
·Convert the frequency thus calculated into a distance value and outputs measurement data including the distance value.

The destination of the measurement data is for example a display device 210. In a case where the measurement apparatus 100 is mounted on a movable body, the measurement data may be outputted to a control device 220 that controls the actions (such as steering and velocity) of the movable body. The measurement data may be stored in the storage device 150 or an external storage device.

Next, more detailed configuration examples of the light source 110 and the interference optical system 120 are described.

Fig. 3 is a block diagram showing configuration examples of the light source 110 and the interference optical system 120. In this example, the light source 110 includes a driving circuit 111 and a light-emitting element 112. The driving circuit 111 receives a control signal that is outputted from the processing circuit 140, generates a driving current signal corresponding to the control signal, and inputs the driving current signal to the light-emitting element 112. The light-emitting element 112 may be an element, such as s semiconductor laser element, that emits laser light having high coherence. The light-emitting element 112 emits frequency-modulated laser light in response to the driving current signal.

The frequency of laser light that is emitted from the light-emitting element 112 is modulated with constant periodicity. The modulation period of the frequency may for example be longer than or equal to 1 microsecond (µs) and shorter than or equal to 10 milliseconds (ms). The modulation amplitude of the frequency may for example be higher than or equal to 100 MHz and lower than or equal to 1 THz. The wavelength of the laser light may be included in a near-infrared wavelength region for example longer than or equal to 700 nm and shorter than or equal to 2000 nm. In sunlight, the amount of near-infrared light is smaller than the amount of visible light. For this reason, the effect of sunlight can be reduced by using near-infrared as the laser light. Depending on the purposes, the wavelength of the laser light may be included in a wavelength region of visible light longer than or equal to 400 nm and shorter than or equal to 700 nm or a wavelength region of ultraviolet light.

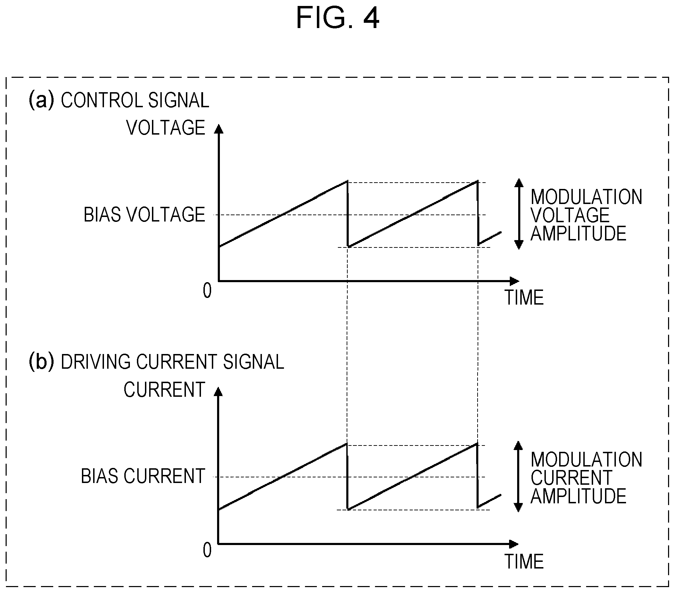

Fig. 4 is a diagram showing examples of a control signal that is outputted from the processing circuit 140 and a driving current signal that is outputted from the driving circuit 111. (a) and (b) of Fig. 4 show examples of the waveforms of the control signal and the driving current signal, respectively. The control signal applies, to the driving circuit 111 of the light source 110, a voltage that fluctuates with predetermined periodicity and predetermined amplitude. For example, as shown in portion (a) of Fig. 4, the voltage of the control signal may be modulated into a sawtooth waveform. The voltage of the control signal is not limited to a sawtooth waveform but may be modulated into a triangular waveform. Since the voltage of the control signal repeats a linear change as in the case of a sawtooth waveform or a triangular waveform, the frequency of light that is emitted from the light-emitting element 112 can be swept in an almost linear form. Note, however, that as mentioned earlier, the frequency is not completely linearly swept. The amplitude of a modulated waveform of such a control signal is called "modulation voltage amplitude", and a voltage lying at the midpoint of a modulation range is called "bias voltage". The control signal applies, to the driving circuit 111 of the light source 110, a voltage that fluctuates around the bias voltage.

The driving circuit 111 converts the control signal into the driving current signal and drives the light-emitting element 112 in accordance with the driving current signal. As shown in portion (b) of Fig. 4, the driving current signal changes in a waveform corresponding to the waveform of the control signal. The modulation range, i.e., amplitude, of the driving current signal is called "modulation current amplitude", and a voltage lying at the midpoint of the modulation range is called "bias current". As the voltage of the control signal increases, the driving current signal increases, so that the frequency of laser light that is emitted from the light-emitting element 112 becomes higher (that is, the wavelength becomes shorter). On the other hand, as the voltage of the control signal decreases, the driving current signal decreases, so that the frequency of laser light that is emitted from the light-emitting element 112 becomes lower (that is, the wavelength becomes longer).

In the example shown in Fig. 3, the interference optical system 120 includes a divider 121, a mirror 122, and a collimator 123. The divider 121 divides laser light emitted from the light-emitting element 112 of the light source 110 into reference light and output light and generates interfering light by coupling the reference light with reflected light from the physical object 300. The mirror 122 reflects the reference light back to the divider 121. The collimator 123 includes a collimating lens, converts the output light into light having an almost parallel spread angle, and irradiates the physical object 300 with the light. The interference optical system 120 is not limited to the configuration shown in Fig. 3 but may for example include a fiber optical system. In that case, a fiber coupler may be used as the divider 121. The reference light is not necessarily need to be reflected off the mirror 122, but the reference light 121 may be returned to the divider 121, for example, by the routing of an optical fiber.

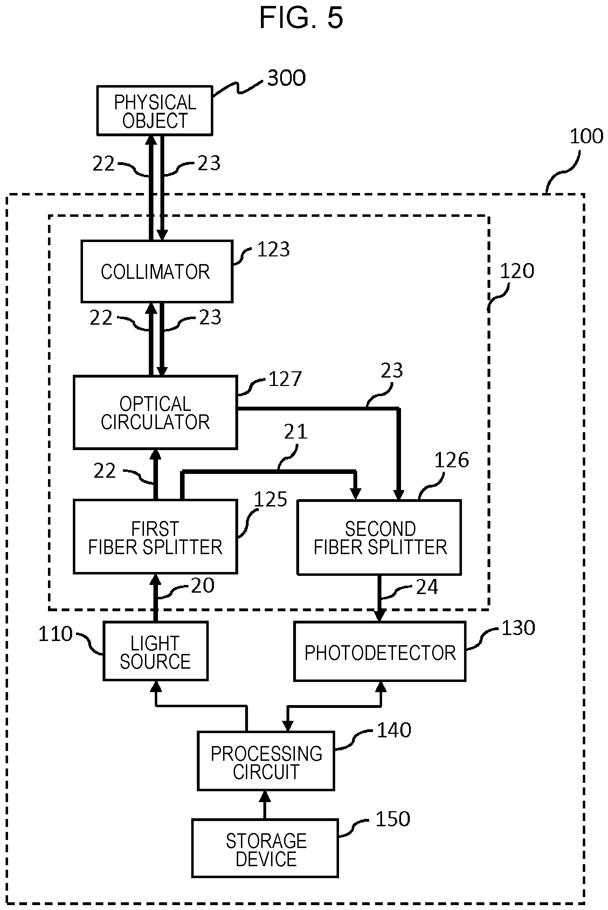

Fig. 5 is a block diagram showing a configuration example of the measurement apparatus 100 whose interference optical system 120 is a fiber optical system. In the example shown in Fig. 5, the interference optical system 120 includes a first fiber splitter 125, a second fiber splitter 126, and an optical circulator 127. The first fiber splitter 125 splits laser light 20 emitted from the light source 110 into reference light 21 and output light 22. The first fiber splitter 125 causes the reference light 21 to fall on the second fiber splitter 126 and causes the output light 22 to fall on the optical circulator 127. The optical circulator 127 causes the output light 22 to fall on the collimator 123. The optical circulator 127 also causes reflected light 23 produced by irradiating the physical object 300 with the output light 22 to fall on the second fiber splitter 126. The second fiber splitter 126 causes interfering light 24 resulting from interference between the reference light 21 and the reflected light 23 to fall on the photodetector 130. The collimator 123 forms the output light 22 into the shape of a beam and emits the output light 22 toward the physical object 300.

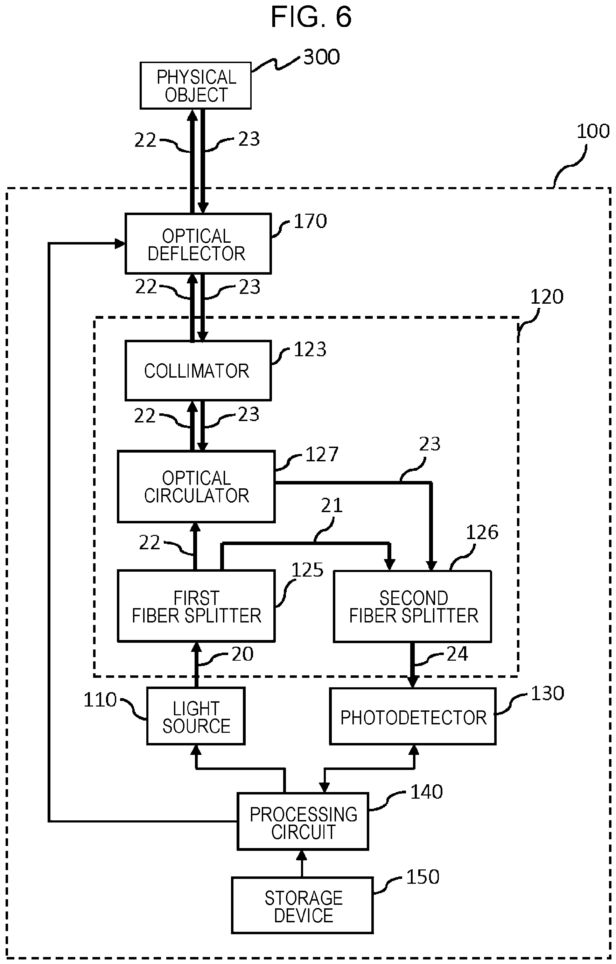

The measurement apparatus 100 may further include an optical deflector that changes the direction of emitted light. Fig. 6 is a block diagram showing an example of the measurement apparatus 100 including an optical deflector 170. The optical deflector 170 may for example include a MEMS (micormechanical electrosystem) mirror or a galvanometer mirror. The optical deflector 170 can change the direction of emission of the output light 22 by changing the angle of the mirror in accordance with an instruction from the processing circuit 140. This makes it possible to achieve a beam scan. The optical deflector 170 is not limited to the foregoing configuration but may be a beam scan device, such as that described in Internal Publication No. 2019/130720, that includes an optical phased array and a slow-light waveguide.

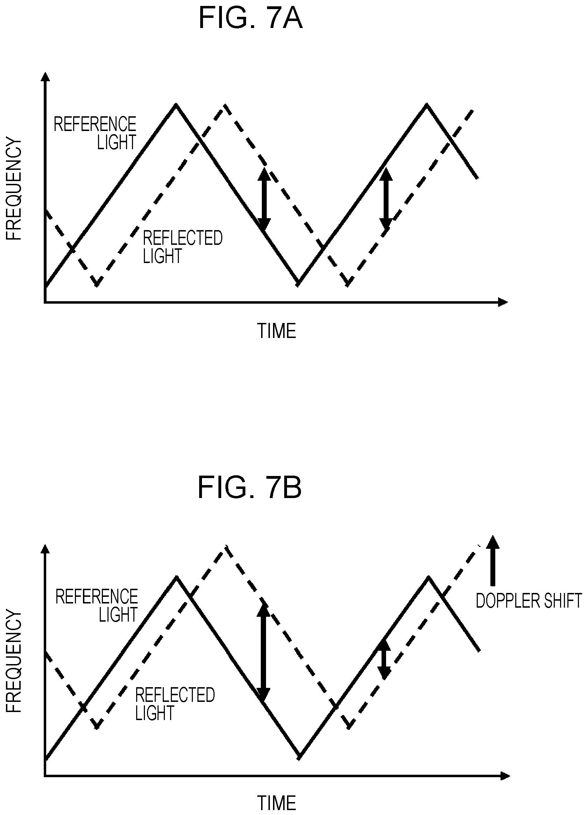

Next, the FMCW-LiDAR technique, which is used in the present embodiment, is briefly described with reference to Figs. 7A and 7B.

Fig. 7A is a diagram schematically showing examples of time changes in frequency of reference light and reflected light in a case where the physical object 300 is at rest. The example described here is a case where the changes in frequency take triangular waveforms. In Fig. 7A, the solid line represents the reference light, and the dashed line represents the reflected light. The frequency of the reference light shown in Fig. 7A linearly increases during one period and then linearly decreases as much as it increased. In comparison with the frequency of the reference light, the frequency of the reflected light shifts along the time axis as much as it takes time for output light emitted from the measurement apparatus 100 and reflected by the physical object 300 to return. For this reason, interfering light resulting from interference between the reference light and the reflected light has a frequency corresponding to a difference between the frequency of the reflected light and the frequency of the reference light. The double-headed arrows shown in Fig. 7A indicate the difference in frequency between the reflected light and the reference light. The photodetector 130 outputs a signal representing the intensity of the interfering light. This signal is called "beat signal". The frequency of the beat signal, i.e., the beat frequency, is equal to the difference in frequency. The processing circuit 140 can calculate the distance from the measurement apparatus 100 to the physical object 300 on the basis of the beat frequency.

Fig. 7B is a diagram schematically showing time changes in frequency of reference light and reflected light in a case where the physical object 300 is approaching the measurement apparatus 100. In a case where the physical object 300 approaches, a Doppler shift causes the frequency of the reflected light to shift in a direction toward increasing along the frequency axis in comparison with a case where the physical object 300 is at rest. The amount of shift in frequency of the reflected light depends on the magnitude of a component of a velocity vector in a certain portion of the physical object 300 projected in the direction of the reflected light. Beat frequencies vary between a case where the frequencies of the reference light and the reflected light linearly increase and a case where the frequencies of the reference light and the reflected light linearly decrease. In the example shown in Fig. 7B, the beat frequency in the case where the frequencies of the reference light and the reflected light linearly decrease is higher than the beat frequency in the case where the frequencies of the reference light and the reflected light linearly increase. The processing circuit 140 can calculate the velocity of the physical object 300 on the basis of the difference between these beat frequencies. In a case where the physical object 300 recedes from the measurement apparatus 100, the frequency of the reflected light shifts in a direction toward decreasing along the frequency axis in comparison with the case where the physical object 300 is at rest. In this case too, the velocity of the physical object 300 can be calculated on the basis of the difference in beat frequency between the case where the frequencies of the reference light and the reflected light linearly increase and the case where the frequencies of the reference light and the reflected light linearly decrease.

### <Operation>

The following describes the operation of the measurement apparatus 100 of the present embodiment.

The operation of the measurement apparatus 100 of the present embodiment can be broadly divided into two steps, namely (1) calibration and (2) ranging. The calibration is performed by a person in charge (hereinafter called "operator") of a manufacturer before shipment of the measurement apparatus 100. The ranging is performed mainly by a user of the measurement apparatus 100.

### <Operation of Calibration>

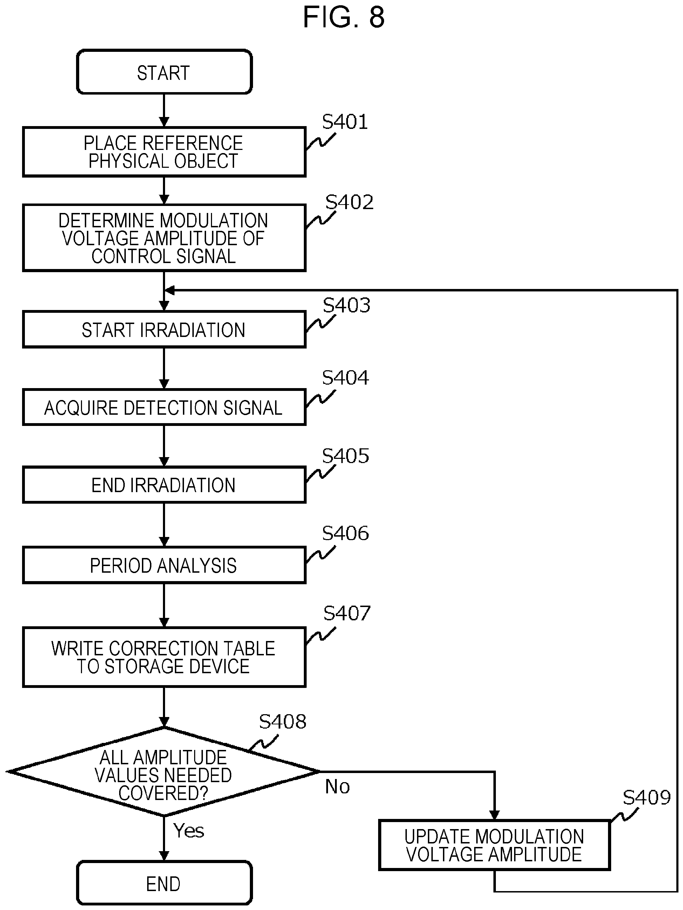

Fig. 8 is a flow chart showing an example of an operation of calibration. The operation of calibration includes the actions of steps S401 to S409 shown in Fig. 8. The following describes the action of each step. The example described here is a case where the operating state of the light source 110 is determined by the modulation voltage amplitude of a control signal.

### (Step S401)

With the measurement apparatus 100 at rest, the operator places a reference physical object at rest in a location at a particular distance from the measurement apparatus 100. A usable example of the reference physical object is a mirror, a diffuse reflector, or an object to be actually subjected to ranging.

### (Step S402)

The processing circuit 140 determines the modulation voltage amplitude of a control signal. The value of this amplitude may be determined by the operator and set by the processing circuit 140 in accordance with the operator's operation. The amplitude value may be determined, for example, by listing a plurality of values that may be actually used by the user of the measurement apparatus 100 and selecting one value from among them. In a case where the measurement apparatus 100 is capable of switching from operating in one distance range (i.e., a measurable distance range) to operating in another distance range, different modulation amplitudes may be set separately according to each of the distance measurement ranges.

### (Step S403)

The processing circuit 140 sends out the control signal to the light source 110 and causes the light source 110 to emit frequency-modulated light. This action is executed in accordance with an instruction from the operator.

### (Step S404)

The processing circuit 140 acquires a detection signal from the photodetector 130. While the light is being emitted from the light source 110, the photodetector 130 outputs a detection signal corresponding to the intensity of interfering light. The time length of a detection signal that the processing circuit 140 acquires may for example be 1 to 50 times longer than the modulation period. In a case where the processing circuit 140 averages detection signals for improvement in S/N ratio of a detection signal, the processing circuit 140 repeats a process of acquiring detection signals for a relatively long period of time and averaging the detection signals for a predetermined period of time that is sufficiently shorter than the modulation period. The processing circuit 140 includes, for example, an analog/digital (A/D) converter and a memory. The processing circuit 140 digitalizes a detection signal waveform, for example, with the A/D converter and stores it in the memory.

### (Step S405)

The processing circuit 140 stops the emission of the light from the light source 110 by stopping sending out the control signal. This step may be executed in accordance with an instruction from the operator. Alternatively, the processing circuit 140 may automatically stop the emission in accordance with a predetermined program. In a case where the operation of calibration is continuously repeated, the light may be kept emitted.

### (Step S406)

The processing circuit 140 analyzes the period of the detection signal. An example of a method for analyzing the period is a method in which the maximum value of an upward projecting portion of the waveform of a detection signal or the minimum value of a downward projecting portion of the waveform of the detection signal is extracted and the length of time from a point taking on the maximum value to the next point taking on the maximum value or the length of time from a point taking on the minimum value to the next point taking on the minimum value is regarded as one period. In an alternative method for analyzing the period, zero-crossing points (i.e. points at which the value of the detection signal changes from positive to negative or from negative to positive) may be extracted, and the length of time from a positive to negative zero-crossing point to the next positive to negative zero-crossing point or the length of time from a negative to positive zero-crossing point to the next negative to positive zero-crossing point may be regarded as one period.

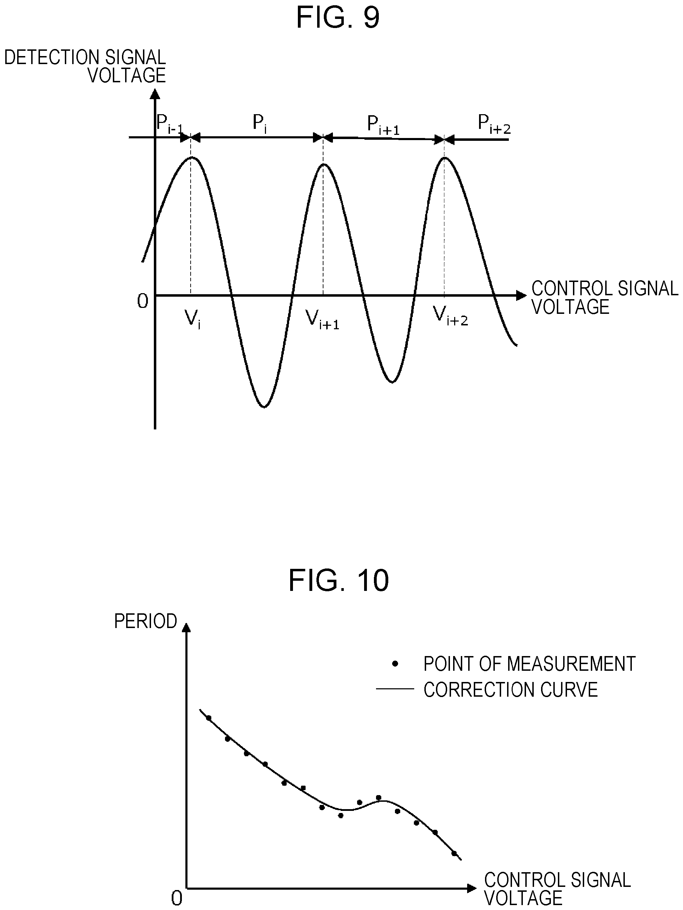

Fig. 9 is a graph showing an example of a result of analysis of the period of a detection signal. In this example, a waveform indicating a relationship between the voltage of a control signal and the voltage of the detection signal is plotted. Periods in which the control signal voltage takes on Vᵢ, Vᵢ₊₁, Vᵢ₊₂, ... at which the voltage of the detection signal reaches the peaks (maximum values) of upward projecting portions are defined as Pᵢ, Pᵢ₊₁, Pᵢ₊₂, .... In this example, the length of time from the point of time at which the control signal voltage takes on Vᵢ to the point of time at which the control signal voltage takes on Vᵢ₊₁ is defined as the period Pᵢ.

Next, as shown in Fig. 10, the processing circuit 140 plots a relationship between the voltages Vᵢ, Vᵢ₊₁, Vᵢ₊₂, ... of the control signal and the periods Pᵢ, Pᵢ₊₁, Pᵢ₊₂, ... at those voltages and obtains an approximate expression for the plotted points. The approximate expression is for example an expression composed of two or more terms and may for example be obtained using the method of least squares.

### (Step S407)

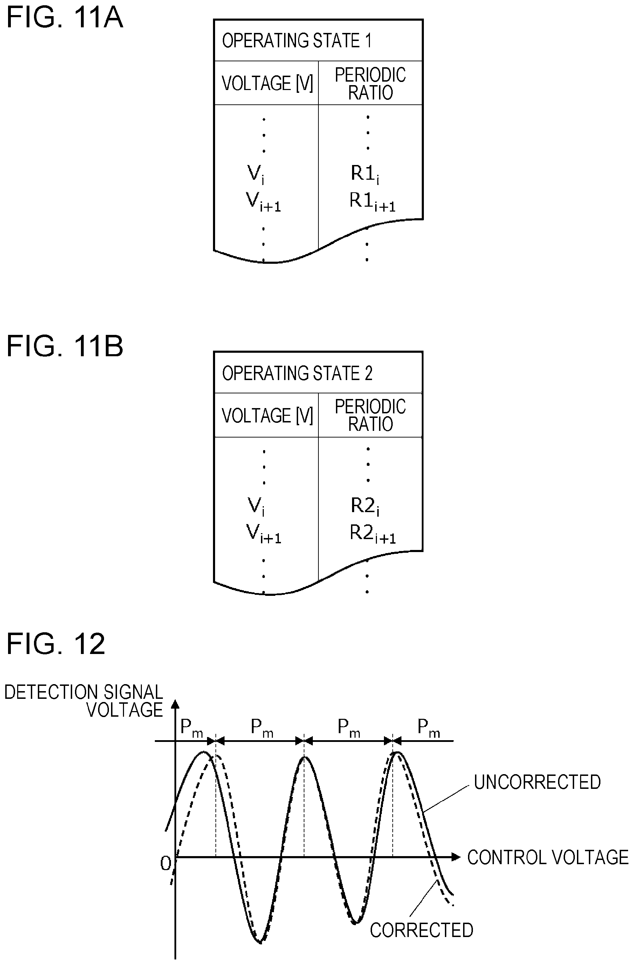

The processing circuit 140 creates, on the basis of the approximate expression thus generated, a correction table indicating a relationship between the voltages of the control signal and periodic ratios and writes the correction table to the storage device 150. Figs. 11A and 11B are diagrams showing examples of correction tables. Correction tables may be stored separately for each of different operating states (in this example, modulation voltage amplitudes) of the light source in such a format as to indicate a relationship between control signal and periodic ratio. Figs 11A and 11B show examples of correction tables associated with different first and second operating states of the light source, respectively. Although, in these examples, two correction tables are stored, three or more correction tables may be stored. Further, without being bound by correction table formats, correcting data indicating a relationship between control signal and correction value such as periodic ratio in another format such as a function may be stored.

A periodic ratio may for example be a value obtained by normalizing the period by a predetermined constant so that a beat frequency after correction of the waveform of a detection signal takes on a value that is theoretically derived from the distance to the reference physical object, the modulation period, the modulation frequency range, and the speed of light. Fig. 12 is a diagram showing examples of the waveforms of uncorrected and corrected detection signals. The constant may be set to such a value that the beat frequency of the waveform of the corrected detection signal takes on a constant value 1/Pm.

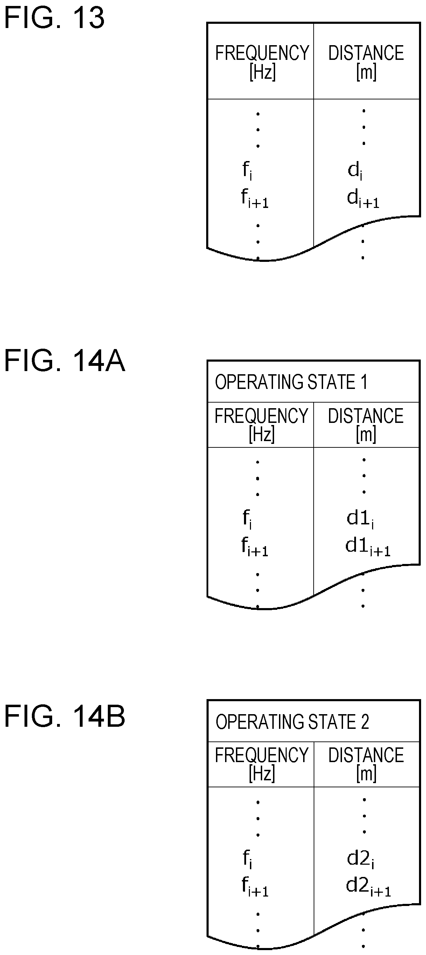

A relationship between beat frequency and distance may be stored either in the memory in the processing circuit 140 or in the storage device 150 in the form of a conversion table such as that shown in Fig. 13. Such a conversion table is used when the processing circuit 140 calculates a distance value in the step of ranging operation.

It should be noted that a periodic ratio may be determined by normalization by an appropriate constant for each operating state. In that case, for example, as shown in Figs. 14A and 14B, a relationship between beat frequency and distance in each operating state may be stored in the memory in the processing circuit 140 as correcting data such as a conversion table or a function.

### (Steps S408 and S409)

The processing apparatus 140 determines whether calibrations have been performed for all modulation voltage amplitude values that are needed during actual use of the measurement apparatus 100. Since the modulation voltage amplitude values are continuous variates, the processing circuit 140 determines whether calibrations have been performed for all voltage values at regular intervals (e.g., 0.1 V) within a predetermined amplitude value range. In a case where all calibrations have been performed, the step of calibration is ended. In a case where all calibrations have not been performed yet, the processing circuit 140 updates the modulation voltage amplitude and repeats from step S403 to step S407.

By performing such a calibration operation, the processing circuit 140 can cause the storage device 150 to store correction tables corresponding to a plurality of different operating states.

It should be noted that the operating state of the light source 110 depends on other parameters such as the bias voltage of the control signal or the temperature of the light source 110 as well as the modulation voltage amplitude of the control signal. In a case where the operating state of the light source 110 is determined on the basis of a parameter other than modulation voltage amplitude, steps S402 and S409 are executed for that parameter.

### <Ranging Operation>

Next, an example of a ranging operation by the measurement apparatus 100 is described. The example described here too is a case where the operating state of the light source 110 is determined by the modulation voltage amplitude of a control signal.

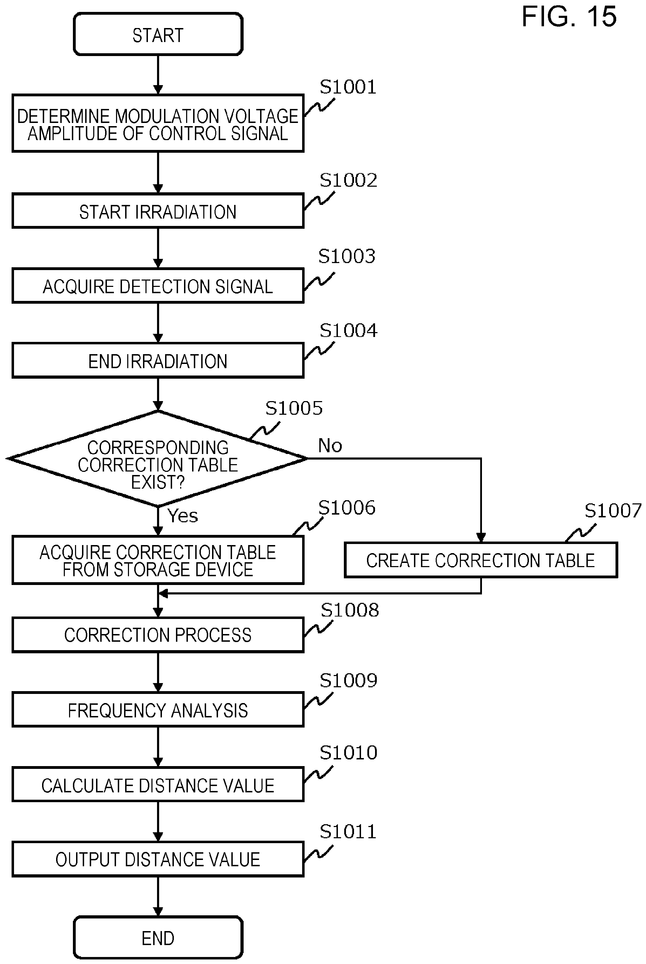

Fig. 15 is a flow chart showing an example of a ranging operation. In the present embodiment, in carrying out the ranging operation, the processing circuit 140 executes the actions of steps S1001 to S1011 shown in Fig. 15. The following describes the action of each step.

### (Step S1001)

First, the processing circuit 140 determines the modulation voltage amplitude of a control signal. The value of this amplitude may be determined by the user of the measurement apparatus 100 and set by the processing circuit 140 in accordance with the user's operation. The measurement apparatus 100 may be configured to switch from operating in one distance range (i.e., a measurable distance range) to operating in another distance range. In that case, the user sets an appropriate distance measurement range according to the environment in which the physical object exists.

### (Step S1002)

The processing circuit 140 sends out the control signal to the light source 110 and causes the light source 110 to emit frequency-modulated light. This action is executed in accordance with an instruction from the user.

### (Step S1003)

The processing circuit 140 acquires a detection signal outputted from the photodetector 130. As in the case of step S404 in the calibration operation shown in Fig. 8, in a case where the processing circuit 140 averages detection signals for improvement in S/N ratio of a detection signal, the processing circuit 140 repeats a process of acquiring detection signals for a relatively long period of time and averaging the detection signals for a predetermined period of time that is sufficiently shorter than the modulation period.

### (Step S1004)

The processing circuit 140 stops the emission of the light from the light source 110 by stopping sending out the control signal. This step may be executed in accordance with an instruction from the user. Alternatively, the processing circuit 140 may automatically stop the emission in accordance with a predetermined program. In a case where the ranging operation is continuously repeated, the light may be kept emitted.

### (Steps S1005 and S 1006)

The processing circuit 140 searches the storage device 150 for a correction table corresponding to the modulation voltage amplitude thus determined. The correction table is data, such as those shown in Figs. 11A and 11B, that defines a relationship between control signal voltage and periodic ratio (i.e., correction value). In a case where there exists a corresponding correction table in the storage device 150, the processing circuit 140 reads out the correction table from the storage device 150.

### (Step S 1007)

In a case where there is no correction table corresponding to the modulation voltage amplitude thus determined, the processing circuit 140 creates a correction table. The processing circuit 140 can create a correction table, for example, in the following way. First, the processing circuit 140 selects, from among the plurality of correction tables stored in the storage device 150, two correction tables respectively corresponding to two modulation voltage amplitudes that are closest to the modulation voltage amplitude thus determined. By performing an interpolation process on the basis of these correction tables, the processing circuit 140 can generate a correction table corresponding to the modulation voltage amplitude thus determined. Let it be assumed, for example, that A₀ is the present modulation voltage amplitude, A₁ and A₂ are the modulation voltage amplitudes corresponding to the two correction tables thus selected, respectively, and R₁ and R₂ are correction values corresponding to the amplitudes A₁ and A₂, respectively. In that case, the correction value R₀ corresponding to the present modulation voltage amplitude A₀ can be obtained, for example, by an computation of R₀ = R₁ + (A₀ - A₁) × (R₂ - R₁)/(A₂ - A₁).

### (Step S1008)

The processing circuit 140 corrects the waveform of the detection signal on the basis of the correction table. This correction reduces fluctuations in period of the beat signal for example as shown in Fig. 12.

### (Step S 1009)

The processing circuit 140 conducts a frequency analysis of the waveform of the detection signal thus corrected. In this step, for example, the processing circuit 140 performs Fourier transformation on the waveform of the detection signal to generate a frequency spectrum. After that, the processing circuit 140 obtains a frequency at which the maximum peak of the frequency spectrum is obtained and uses the frequency as the beat frequency.

### (Step S1010)

The processing circuit 140 calculates the beat frequency by converting it into a distance value. In this conversion process, the processing circuit 140 reads out for use, from the memory in the processing circuit 140, a conversion table illustrated in Fig. 13A, Fig. 14A, or Fig. 14B.

### (Step S 1011)

The processing circuit 140 outputs measurement data including information on the distance value thus calculated to an external device such as the display device 210.

Through the foregoing operation, the processing circuit 140 can generate distance data on the physical object 300. In a case where ranging is continuously performed, the operation from step S1001 to step S 1011 is continuously repeated. Further, in a case where the velocity of the physical object 300 is measured in addition to the distance, a control signal in a triangular waveform may be used instead of a control signal in a sawtooth waveform such as that shown in Fig. 4, and the velocity may be calculated by the method described with reference to Figs. 7A and 7B.

As noted above, in the present embodiment, the processing circuit 140 corrects a detection signal using, as correcting data, a correction table corresponding to the modulation voltage amplitude of a control signal and conducts a frequency analysis on the basis of the detection signal thus corrected. This makes it possible to obtain a distance value with reduced fluctuations in frequency of a beat signal contained in the detection signal, making it possible to more precisely measure the distance to the physical object.

### (Second Embodiment)

Next, a measurement apparatus according to a second embodiment is described.

### <Configuration>

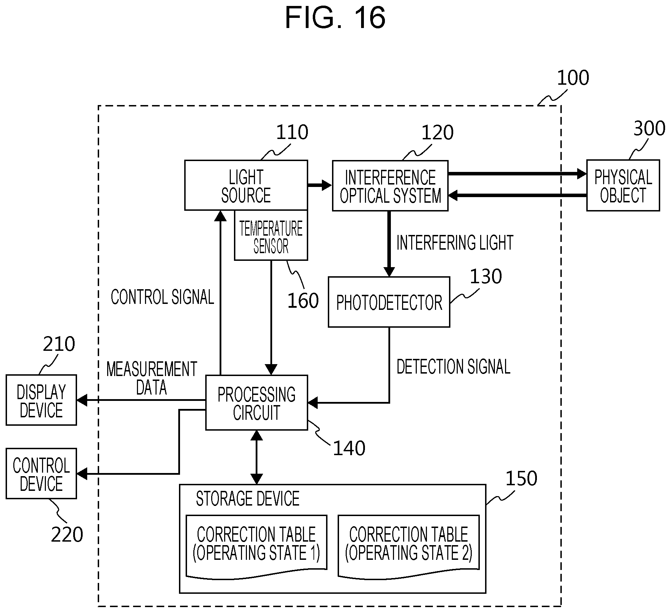

Fig. 16 is a block diagram schematically showing a configuration of a measurement apparatus 100 according to a second embodiment. A point of difference from the first embodiment lies in that the measurement apparatus 100 further includes a temperature sensor 160. The temperature sensor 160 measures the temperature of the light source 110 and sends out data representing the temperature value to the processing circuit 140.

The nonlinearity of frequency modulation of light that is emitted from the light source 110 when the voltage of a control signal has been swept is affected by a change in temperature of the light-emitting element 112. Accordingly, the temperature sensor 160 may be disposed to be able to measure the temperature of the light-emitting element 112 as directly as possible. The temperature of the light-emitting element 112 may also be indirectly estimated by attaching the temperature sensor 160 to the measurement apparatus 100 and measuring the temperature of the surrounding area. However, for enhancement of measurement precision and temporal followability, the temperature sensor 160 may have its temperature detector disposed to be firmly fixed to the light-emitting element 112 per se or a heat sink to which the light-emitting element 112 is fixed.

### <Operation>

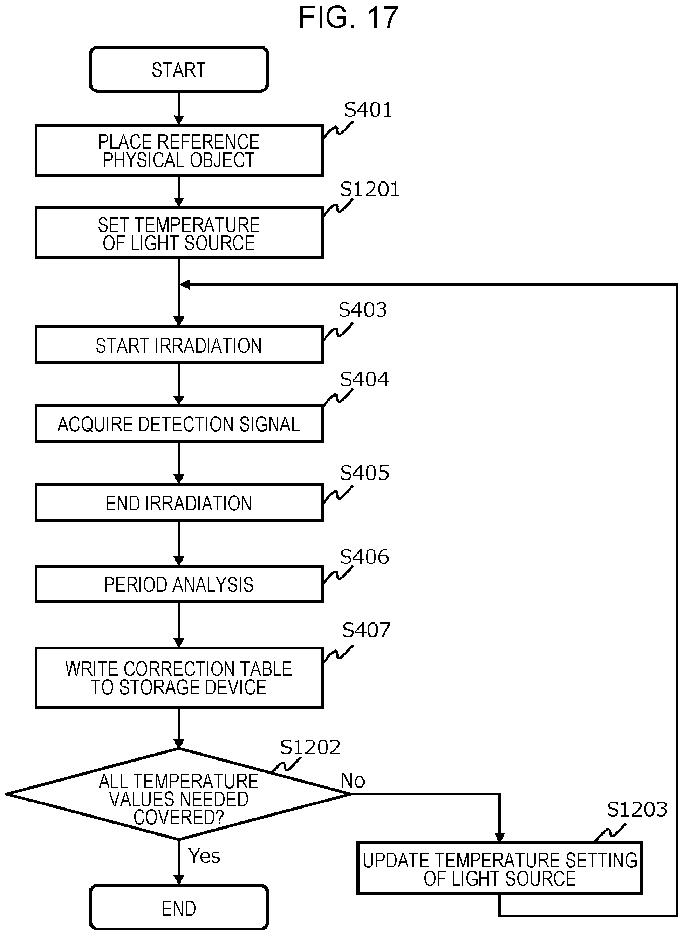

Fig. 17 is a flow chart showing a calibration operation according to the second embodiment. A point of difference from the calibration operation according to the first embodiment shown in Fig. 8 lies in that steps S402, S408, and S409 are replaced by steps S1201, S1202, and S1203, respectively. The following describes the actions of these steps.

In step S1201, the temperature of the light source 110 is set. A temperature value may be set, for example, to any value falling within a temperature range in which the measurement apparatus 100 is supposed to operate. The temperature of the light source 110 can be controlled, for example, by driving a Peltier element firmly fixed to the light-emitting element 112.

In step S1202, it is determined whether all calibrations have been performed for the operating temperature range of the measurement apparatus 100. Since operating temperatures are continuous variates, it is determined whether calibrations have been completed for all temperatures at intervals of 10°C within the operating temperature range. In a case where all calibrations have not been completed, the processing circuit 140 proceeds to step S1203 to update the temperature setting of the light source 110 and repeats the operation from step S403 to step S407.

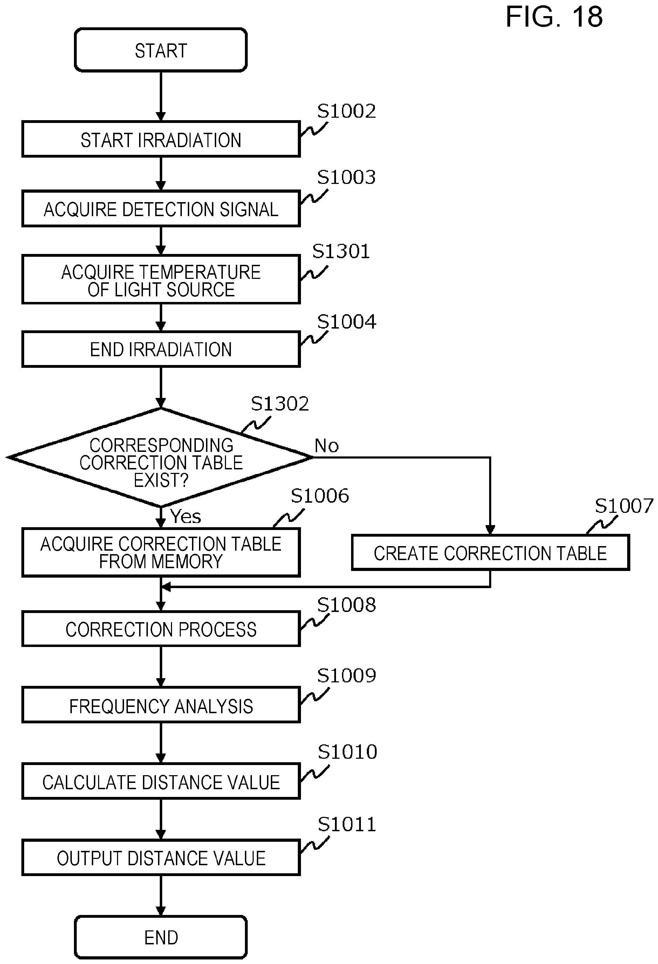

Fig. 18 is a flow chart showing a ranging operation according to the second embodiment. The ranging operation according to the second embodiment differs from the ranging operation according to the first embodiment shown in Fig. 15 in that step S1001 is omitted, that step S1301 is added between step S1003 and step S1004, and that a different correction table is referred to in step S1302. The following describes the actions of these steps.

In step S1301, the temperature sensor 160 measures the temperature of the light source 110, and the processing circuit 140 acquires the temperature value. The temperature is acquired at intervals of, for example, approximately 0.1 second to 1 second. Variations in measured value may be reduced by averaging temperature values measured a plurality of times.

In step S1302, the processing circuit 140 searches the storage device 150 for a correction table corresponding to the temperature thus measured. If there is a corresponding table in the storage device 150, the processing circuit 140 uses the correction table (step S1006), and if there is no corresponding correction table, the processing circuit 140 creates a correction table (step S1007). The process of step S1007 is similar to that of the first embodiment.

According to such a configuration and operation, the processing circuit 140 according to the present embodiment corrects a detection signal using, as correcting data, a correction table corresponding to the temperature of the light source 110 and conducts a frequency analysis on the basis of the detection signal thus corrected. This makes it possible to obtain the distance value with reduced fluctuations in frequency of a beat signal contained in the detection signal, making it possible to more precisely measure the distance to the physical object.

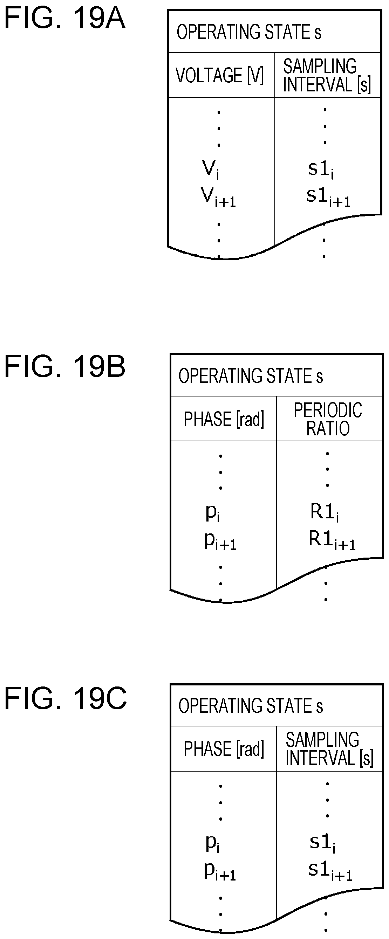

The correction table needs only correct nonlinear fluctuations in the period of a detection signal, and is not limited to the aforementioned format. For example, as shown in Fig. 19A, a correction table that designates time interval of sampling with respect to control voltage (i.e., makes sampling happen virtually at irregular time intervals) may be used, although the timing of sampling of A/D conversion is supposed to come at regular time intervals. A detection signal reconfigured by thus changing the timing of sampling may be used as a corrected detection signal. Further, as shown in Fig. 19B, a correction table that designates periodic ratio with respect to phase of frequency modulation may be used. Alternatively, as shown in Fig. 19C, a correction table that designates time interval of sampling with respect to phase of frequency modulation may be used. In each of the examples shown in Figs. 19B and 19C, a correction table that defines a relationship between the timing (i.e., time) of frequency modulation instead of phase and correction value such as sampling interval or periodic ratio may be used. Further, in each of the aforementioned examples, a correction table that defines a relationship between driving current instead of control voltage and periodic ratio or sampling interval may be used. The aforementioned correction table may be replaced by an approximate expression per se being stored in a storage device such as a memory as a correction function, and the processing circuit 140 may be configured to correct a detection signal on the basis of a correction function corresponding to the operating state. Furthermore, the operating state of the light source 110 may be determined by any two or more combinations of a control voltage or a driving current, a temperature, and a bias voltage or a bias current. In that case, correcting data may be created and stored for each of the combinations.

### (Examples)

The following describes the results of experiments conducted to verify the effects of the embodiments of the present disclosure.

### <Creation of Correction Tables for Different Modulation Voltage Amplitudes>

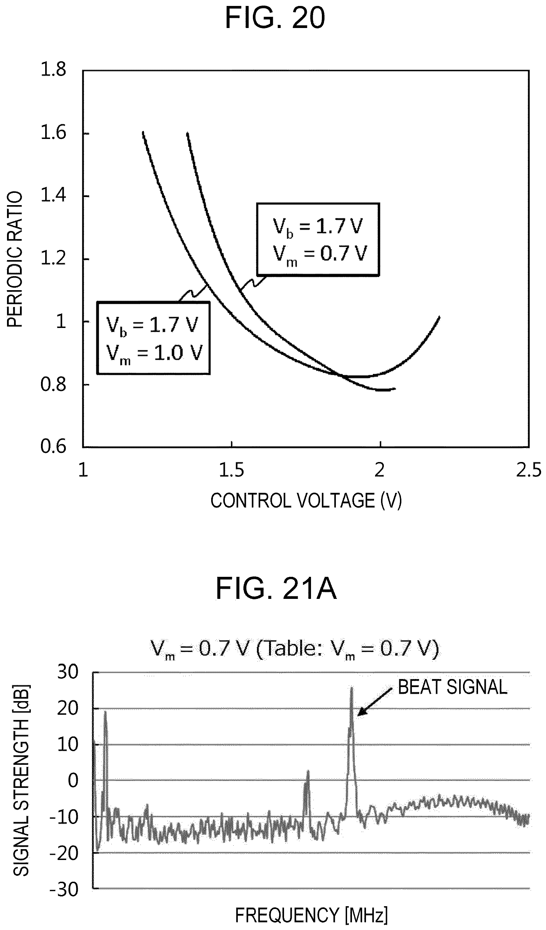

Fig. 20 is a graph showing a result of creation of correction tables by performing calibrations with two types of modulation voltage amplitude on the basis of the configuration and operation of the first embodiment. The bias voltage V_{b} of 1.7 V of a control signal and the temperature of 27°C of the light source were shared in common, and the modulation voltage amplitudes Vₘ were 0.7 V and 1.0 V. The approximate expressions were created as cubic functions. The constants of normalization for obtaining periodic ratios were set to appropriate values. In the present example, this determination was made so that the sum of periodic ratios over an analytical period becomes equal for each of the operating states. Accordingly, the absolute value of a beat frequency in one operating state is not equal to the absolute value of a beat frequency in the other operating state. As shown in Fig. 20, it was confirmed that the shapes of the graphs of the correction tables in the two operating states were different.

Figs. 21A to 21C are graphs showing results of having obtained frequency spectra by applying different correction tables to three detection signals respectively corresponding to three operating states of different modulation voltage amplitudes and conducting frequency analyses.

Fig. 21A is a graph showing a result of application of a correction table corresponding to Vₘ = 0.7 V to a detection signal obtained in a case where Vₘ = 0.7 V. A beat signal appears in a portion of the drawing indicated by an arrow.

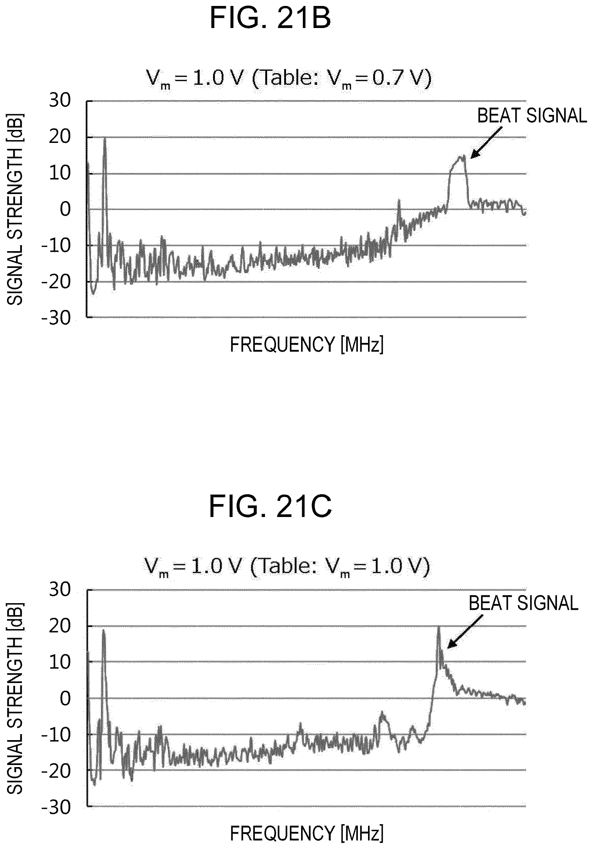

Fig. 21B is a graph showing a result of application of a correction table corresponding to Vₘ = 0.7 V (i.e., corresponding to a different operating state) to a detection signal obtained in a case where Vₘ = 1.0 V. Although the absolute value of the frequency of the beat signal is displaced since the constant of normalization is set to an appropriate value, attention should be paid to the thick line width of the beat signal. A possible reason for this is that fluctuations in period remained in a corrected detection signal due to the application of correction tables corresponding to different operating states. When the line width of the beat signal is thick, an error occurs when a peak frequency is calculated, and the precision of a distance value decreases. The precision of a distance value cannot be improved simply by correcting the absolute value of the frequency of the beat signal after a frequency analysis, as doing so does not make the line width of the beat signal thin.

Fig. 21C is a graph showing a result of application of a correction table corresponding to Vₘ = 1.0 V to a detection signal obtained in a case where Vₘ = 1.0 V. It is shown that the line width of a beat signal is thinner than in the example shown in Fig. 21B. In such a state, a distance value can be determined with a high degree of accuracy simply by correcting the absolute value of the frequency of the beat signal after a frequency analysis.

Although, in the present example, the correction table was created with the modulation voltage amplitude as a parameter, the amplitude of a driving current may be used instead of the modulation voltage amplitude, as the control voltage and the driving current are in a correspondence relationship as mentioned above.

### <Creation of Correction Tables for Different Bias Voltages>

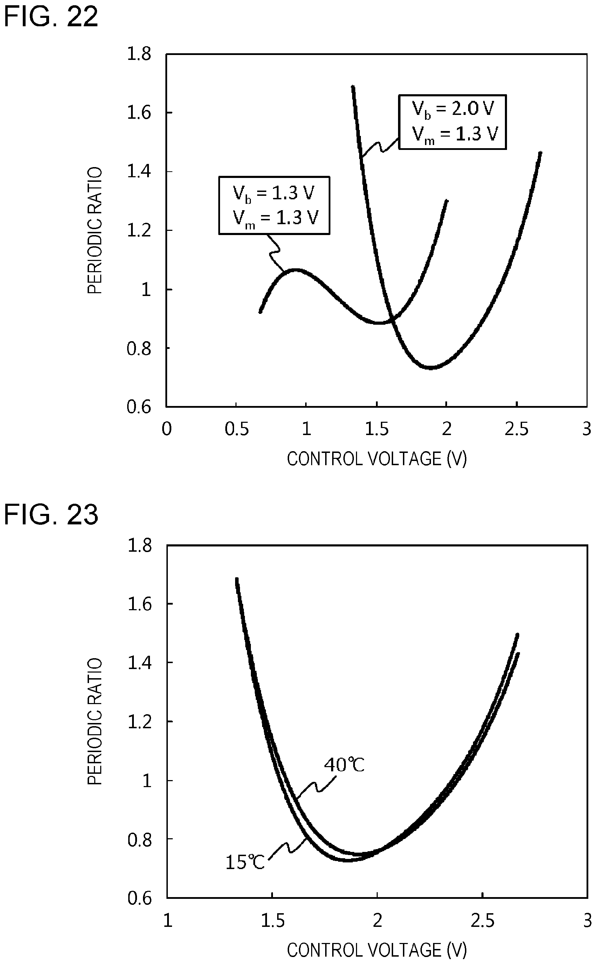

Fig. 22 is a graph showing a result of creation of correction tables in a case where calibrations were performed with two types of bias voltage. In this example, the modulation voltage amplitude Vₘ of 1.3 V of a control signal and the temperature of 27°C of the light source were shared in common, and the bias voltages V_{b} were 1.3 V and 2.0 V. From the result shown in Fig. 22, it was confirmed that the shapes of the graphs of the correction tables in the two operating states were different.

Although, in the present example, the correction table was created with the bias voltage as a parameter, a bias current may be used instead of the bias voltage, as the control voltage and the driving current are in a correspondence relationship as mentioned above.

### <Creation of Correction Tables for Different Temperatures>

Fig. 23 is a graph showing a result of creation of correction tables in a case where calibrations were performed with two types of temperature. The modulation voltage amplitude Vₘ of 1.3 V and the bias voltage V_{b} of 2.0 V of a control signal were shared in common, and the temperature of the light source were 15°C and 40°C. From the result shown in Fig. 23, it was confirmed that the shapes of the graphs of the correction tables in the two operating states were different.

### <Creation of Correction Table Using Interpolation>

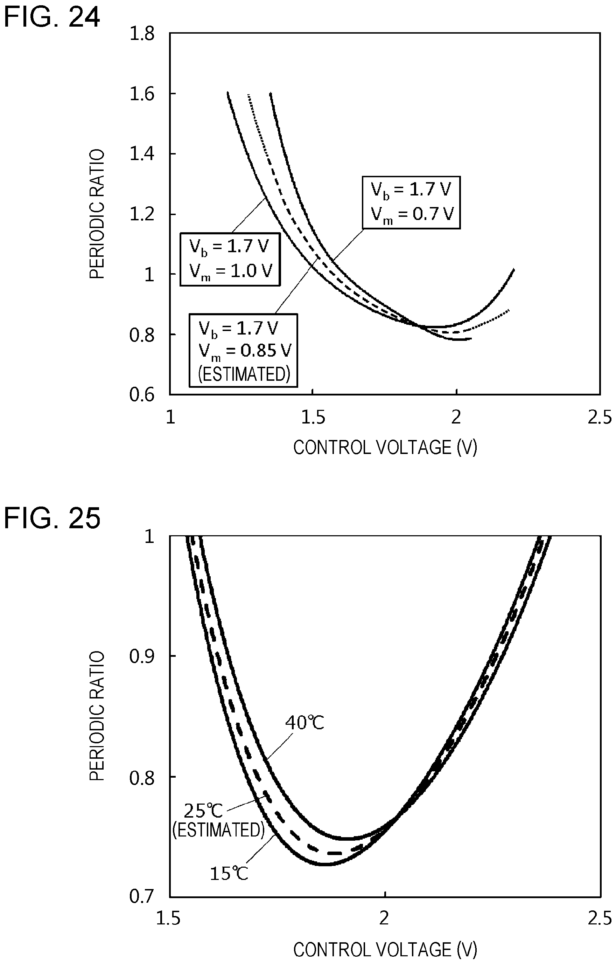

Fig. 24 is a diagram showing an example in which a correction table for Vₘ = 0.85 V was newly created from two already-existing two correction tables (in this example, Vₘ = 0.7 V and Vₘ = 1.0 V). In a range of control voltage in which the values of periodic ratios exist at both Vₘ = 0.7 V and Vₘ = 1.0 V, a periodic ratio at Vₘ = 0.85 V was calculated by interpolation from the periodic ratios of both tables. Outside this range, a periodic ratio at Vₘ = 0.85 V was calculated by extrapolation from the tendency of the plot inside the range.

Fig. 25 is a diagram showing an example in which a correction table for a temperature of 25°C was newly created from two already-existing two correction tables (in this example, a temperature of 15°C and a temperature of 40°C). For ease of comprehension, Fig. 25 is a partial enlargement. The periodic ratio of the correction table for a temperature of 25°C was calculated by interpolation from the periodic ratios at a temperature of 15°C and a temperature of 40°C.

Even if a parameter of operating state is thus a continuous variate, a correction table of intermediate values (i.e., corresponding to an operating state that is not stored in the storage device) can be created on the basis of discretely created correction tables. Creating and using such a correction table of intermediate values makes it possible to further improve the precision of ranging.

### <Other Experimental Examples>

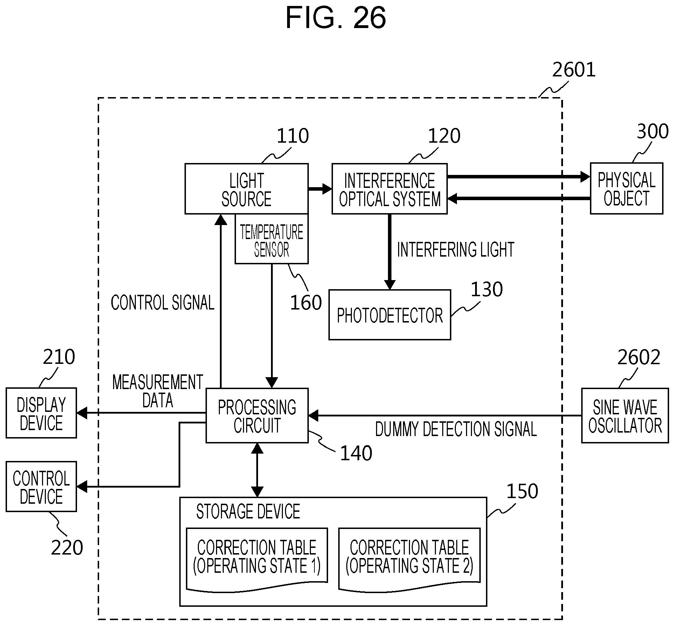

Fig. 26 is a diagram showing a measurement apparatus 2601 according to another experimental example for verifying the effects of the embodiments of the present disclosure. The measurement apparatus 2601 differs in configuration from the measurement apparatus 100 shown in Fig. 2 in that a dummy detection signal that is outputted from an external sine wave oscillator 2602 is inputted to the processing circuit 140 instead of a detection signal from the photodetector 130. Note here that the dummy detection signal is a sine wave whose amplitude and frequency are set close to the amplitude and frequency (e.g., 1 Vpp and 50 MHz) of the original detection signal. Further, the storage device 150 according to the present experimental example has different correction tables stored therein according to the operating state of the light source 110 as in the case of the aforementioned embodiments.

First, assume a case where this measurement apparatus 2601 executes a measuring operation with no correction table applied. At this point in time, it is assumed that the display device 210 display a certain distance value corresponding to the frequency of the dummy detection signal. Further, variations in value among distance values acquired a plurality of times are supposed to constant, provided the dummy detection signal does not fluctuate in frequency fluctuation amount.

Next, assume a case where the measurement apparatus 2601 executes a measuring operation with different correction tables applied according to the operating state of the light source 110. In this case, the measurement apparatus 2601 executes the measuring operation with two variations, namely Vₘₐ and V_{mb}, of the modulation voltage amplitude of the light source 110 and application of correction tables corresponding separately to each modulation voltage amplitude. The values of Vₘₐ and V_{mb} are for example 0.7 V and 1.0 V, respectively. σₐ is the dispersion in the values of distance values acquired a plurality of times with the modulation voltage amplitude set to Vₘₐ, and σ_{b} is the dispersion in the values of distance values acquired a plurality of times with the modulation voltage amplitude set to V_{mb}.

In a case where such an experiment is conducted, the dispersions in the distance values are supposed to be given as σₐ ≠ σ_{b}. A reason for that is that application of different correction tables to the same dummy detection signal causes a change in spectrum line width of a corrected detection signal and the dispersion in the distance values changes too according to the change in line width. Meanwhile, in a conventional apparatus that applies a correction to a beat signal frequency subjected to a frequency analysis, the dispersions in the distance values are given as σₐ = σ_{b}, as the spectrum line width of the original beat signal does not change even if different corrections are applied to different modulation voltage amplitudes.

An experiment such as that noted above shows that in each of the measurement apparatuses according to the embodiments of the present disclosure, the dispersion in the distance values is controlled by applying different correction tables according to the operating state of the light source 110 to a detection signal yet to be subjected to a frequency analysis.

In each of the aforementioned embodiments of the present disclosure, deterioration of measurement precision due to the nonlinearity of laser light in frequency modulation can be reduced by making a correction to a detection signal yet to be subjected to a frequency analysis. A similar problem may be addressed by eliminating the nonlinearity by correcting a control signal per se to frequency-modulate the laser light. However, such a technique makes it necessary to nonlinearly correct a control signal to the light source. Whereas the generation of a nonlinear control signal and the control of a voltage or a current by the control signal are difficult, the correction to a detection signal yet to be subjected to a frequency analysis is easy and high in precision, as the correction is executed at a level of signal processing. Accordingly, the embodiment of the present disclosure makes it possible to carry out a measurement that is easier and higher in precision than has conventionally been the case.

### Industrial Applicability

A measurement apparatus in the present disclosure can be utilized for uses, for example, in a movable body such as an automated guided vehicle (AGV), an automobile, an unmanned aerial vehicle, or a mobile robot or in an FMCW LiDAR system that is mounted in monitoring equipment.

### Reference Signs List

- 100: ranging apparatus
- 110: light source
- 111: driving circuit
- 112: light-emitting element
- 120: interference optical system
- 121: divider
- 122: mirror
- 123: collimator
- 124: collimating lens
- 125: first fiber splitter
- 126: second fiber splitter
- 127: optical circulator
- 130: photodetector
- 140: processing circuit
- 150: storage device
- 160: temperature sensor
- 170: optical deflector
- 210: display device
- 220: control device
- 300: physical object

## Claims

1. A measurement apparatus comprising:
a light source that emits frequency-modulated light;
an interference optical system that separates the light emitted from the light source into reference light and output light and generates interfering light resulting from interference between reflected light produced by the output light being reflected off a physical object and the reference light;
a photodetector that receives the interfering light and outputs a detection signal corresponding to an intensity of the interfering light;
a storage device that stores a plurality of pieces of correcting data for use in correction of the detection signal, each of the plurality of pieces of correcting data being associated with a corresponding one of a plurality of different operating states of the light source; and
a processing circuit that sends out, to the light source, a control signal that sweeps a frequency of the light that is emitted from the light source, corrects the detection signal on the basis of one or more pieces of correcting data selected from among the plurality of pieces of correcting data according to the operating state of the light source, generates measurement data on a distance to and/or a velocity of the physical object on the basis of the detection signal thus corrected, and outputs the measurement data.

2. The measurement apparatus according to claim 1, further comprising a temperature sensor that measures a temperature of the light source,
wherein
the plurality of pieces of correcting data includes two or more pieces of first correcting data each of which is associated with a corresponding one of two or more operating states differing in temperature of the light source, and
the processing circuit corrects the detection signal on the basis of one or more pieces of first correcting data selected from among the two or more pieces of first correcting data according to the temperature of the light source as measured by the temperature sensor.

3. The measurement apparatus according to claim 1, wherein
the control signal is a signal that inputs a periodically fluctuating voltage or current to the light source,
the plurality of pieces of correcting data includes two or more pieces of second correcting data each of which is associated with a corresponding one of two or more operating states differing in amplitude of the voltage or the current of the control signal, and
the processing circuit corrects the detection signal on the basis of one or more pieces of second correcting data selected from among the two or more pieces of second correcting data according to the amplitude of the present voltage or the present current.

4. The measurement apparatus according to claim 1, wherein
the control signal is a signal that inputs, to the light source, a voltage that periodically fluctuates around a bias voltage or a current that periodically fluctuates around a bias current,
the plurality of pieces of correcting data includes two or more pieces of third correcting data each of which is associated with a corresponding one of two or more operating states differing in the bias voltage or the bias current of the control signal, and
the processing circuit corrects the detection signal on the basis of one or more pieces of third correcting data selected from among the two or more pieces of third correcting data according to the present bias voltage or the present bias current.

5. The measurement apparatus according to any of claims 1 to 4, wherein in a case where no correcting data corresponding to the present operating state of the light source is stored in the storage device, the processing circuit generates, on the basis of at least one of the plurality of pieces of correcting data stored in the storage device, correcting data corresponding to the current operating state and corrects the detection signal on the basis of the correcting data thus generated.

6. The measurement apparatus according to any of claims 1 to 5, wherein in a case where no correcting data corresponding to the present operating state of the light source is stored in the storage device, the processing circuit selects, from among the plurality of pieces of correcting data stored in the storage device, two pieces of correcting data associated with two operating states that are closest to the present operating state, generates, through an interpolation process involving use of the two pieces of correcting data thus selected, correcting data corresponding to the current operating state, and corrects the detection signal on the basis of the correcting data thus generated.

7. The measurement apparatus according to any of claims 1 to 6, wherein each of the plurality of pieces of correcting data contains information on correction values corresponding separately to each of a plurality of voltage values or a plurality of current values of the control signal.

8. The measurement apparatus according to any of claims 1 to 6, wherein each of the plurality of pieces of correcting data contains information on correction values corresponding separately to each of a plurality of phases or a plurality of timings of frequency modulation by the control signal.

9. The measurement apparatus according to any of claims 1 to 8, wherein each of the plurality of pieces of correcting data contains information on a correction value for changing a sampling timing at which the processing circuit samples the detection signal.

10. The measurement apparatus according to any of claims 1 to 9, wherein each of the pieces of correcting data is data representing a correction table or a correction function for determining a correction value for use in correction of the detection signal.

11. The measurement apparatus according to any of claims 1 to 10, wherein the processing circuit creates the plurality of pieces of correcting data and stores each of the plurality of pieces of correcting data in the storage device in association with a corresponding operating state of the light source.

12. A method that is executed by a computer in a system including a measurement apparatus including a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, and a storage device that stores a plurality of pieces of correcting data for use in correction of the detection signal, each of the plurality of pieces of correcting data being associated with a corresponding one of a plurality of different operating states of the light source, the method comprising:
sending out, to the light source, a control signal that sweeps a frequency of the light that is emitted from the light source;
correcting the detection signal on the basis of one or more pieces of correcting data selected from among the plurality of pieces of correcting data according to the operating state of the light source;
generating measurement data on a distance to and/or a velocity of the physical object on the basis of the detection signal thus corrected; and
outputting the measurement data.

13. A computer program that is executed by a computer in a system including a measurement apparatus including a light source that emits frequency-modulated light, an interference optical system that separates the light emitted from the light source into reference light and output light and generates interfering light resulting from interference between reflected light produced by the output light being reflected off a physical object and the reference light, a photodetector that receives the interfering light and outputs a detection signal corresponding to an intensity of the interfering light, and a storage device that stores a plurality of pieces of correcting data for use in correction of the detection signal, each of the plurality of pieces of correcting data being associated with a corresponding one of a plurality of different operating states of the light source, the computer program causing the computer to execute operations comprising:
sending out, to the light source, a control signal that sweeps a frequency of the light that is emitted from the light source;
correcting the detection signal on the basis of one or more pieces of correcting data selected from among the plurality of pieces of correcting data according to the operating state of the light source;
generating measurement data on a distance to and/or a velocity of the physical object on the basis of the detection signal thus corrected; and
outputting the measurement data.
